# EUROPÄISCHE PATENTANMELDUNG

(11) **EP 2 161 001 A1**
(43) Veröffentlichungstag der Anmeldung: **10.03.2010**
(21) Anmeldenummer: 09009537.3
(22) Anmeldetag: 23.07.2009
(51) Int. Cl.: A61C 11/02

(54) **Dentalartikulator**

(30) Priorität: 29.08.2008 DE 102008044886
(71) Anmelder: Dentallabor Bandulet GmbH, 97717 Euerdorf (DE)
(72) Erfinder: Slama, Rudolf, 97702 Münnerstadt (DE); Henneberger, Rudolf, 97702 Münnerstadt (DE)
(74) Vertreter: Blaumeier, Jörg

(57) **Zusammenfassung**

Dentalartikulator (1), umfassend ein gegenüber einem Oberteil (8) ortsfestes Unterteil (2) mit einer Halterung (3) für ein erstes Zahnmodell, insbesondere einen Gipsabdruck eines Unter- oder Oberkiefers, sowie das über eine Schiebe-Schwenklagerung nach Art eines Kiefergelenks gegen das Unterteil (2) bewegbare Oberteil (8) mit einer Halterung (9) für ein zweites, dem ersten zugeordnetes Zahnmodell, insbesondere einen Gipsabdruck eines Ober- oder Unterkiefers, wobei die Schiebe-Schwenklagerung zwei Kondylargelenke (7) mit jeweils einem auf eine an dem Unterteil (2) vorgesehene Kondyle, insbesondere einen Kondylarstift (5), aufsetzbaren Kondylargehäuse (6) am Oberteil (8) zur Simulation der Kiefergelenkbewegungen umfasst, wobei die Kondylen eine zur Mittelvertikalebene des Dentalartikulators (1) senkrechte Kondylarachse (13) bilden, wobei Einstellmittel zur gemeinsamen Verschwenkung der Kondylen um eine zur Kondylarachse (13) senkrechte horizontale Verstellachse und/oder zur gemeinsamen horizontalen Verschiebung der Kondylen entlang der Kondylarachse (13) und/oder zur gemeinsamen vertikalen Verschiebung der Kondylen vorgesehen sind.

## Beschreibung

Die Erfindung betrifft einen Dentalartikulator, umfassend ein gegenüber einem Oberteil ortsfestes Unterteil mit einer Halterung für ein erstes Zahnmodell, insbesondere einen Gipsabdruck eines Unter- oder Oberkiefers, sowie das über eine Schiebe-Schwenklagerung nach Art eines Kiefergelenks gegen das Unterteil bewegbare Oberteil mit einer Halterung für ein zweites, dem ersten zugeordnetes Zahnmodell, insbesondere einen Gipsabdruck eines Ober- oder Unterkiefers, wobei die Schiebe-Schwenklagerung zwei Kondylargelenke mit jeweils einem auf eine an dem Unterteil vorgesehene Kondyle, insbesondere einen Kondylarstift, aufsetzbaren Kondylargehäuse am Oberteil zur Simulation der Kiefergelenkbewegungen umfasst, wobei die Kondylen eine zur Mittelvertikalebene des Dentalartikulators senkrechte Kondylarachse bilden.

Derartige Dentalartikulatoren werden im zahnärztlichen Bereich benötigt, um Unterkieferbewegungen im Rahmen der Herstellung von Zahnersatz, beispielsweise Prothesen oder Brücken, zu simulieren. Dazu weist ein Dentalartikulator üblicherweise ein Unterteil und ein Oberteil auf, die bei Verwendung jeweils ein Unterkieferzahnmodell und ein Oberkieferzahnmodell in Halterungen tragen. Über eine Schiebe-Schwenklagerung sind das Oberteil und das Unterteil und somit die Zahnmodelle gegeneinander bewegbar.

Die Verbindung zwischen Ober- und Unterteil erfolgt dabei durch Kondylargelenke, die eine Gelenkbewegung entsprechend dem menschlichen Kiefergelenk erlauben. Zu diesem Zweck sind bei einem bekannten Dentalartikulator am hinteren Ende des Unterteils zwei im Abstand zueinander vertikal angeordnete Stützen vorgesehen, auf denen die sogenannten Kondylen angeordnet sind, die von unten oder der Seite in insbesondere winkelverstellbare Kondylargehäuse mit entsprechenden Gelenkführungselementen eingreifen.

Häufig ist im vorderen Bereich des Unterteiles und des Oberteiles eine Kombination aus einem Inzisalstift und einer Inzisalplatte vorgesehen, wobei der Inzisalstift entweder am Unterteil oder am Oberteil befestigt werden kann und der anterioren Führung bei den Protrusions-, Retrusions- und Laterotrusionsbewegungen dient. Die bereits erwähnten Gelenkführungselemente, die insbesondere mit sagittalen Gelenkführungsbahnen und transversalen Bennettführungsbahnen versehen sind, dienen der posterioren Führung bei der Simulation der kiefergelenkseitigen transversalen und sagittalen Bewegungen.

Ein derartiger Dentalartikulator ist beispielsweise aus der DE 197 26 978 C2, deren Offenbarungsgehalt hiermit voll umfänglich durch Referenz aufgenommen wird, bekannt. Darin wird konkret vorgeschlagen, die Kondylen als Kondylarstifte auszubilden, wobei zusätzlich austauschbare Gelenkbahneinsätze und Bennett-Einsätze vorgesehen sind. Mit diesem Dentalartikulator ist eine räumlich kontrollierte Führung auf der Laterotrusionsseite im Sinne einer Laterotrusion, Laterosurtrusion, Lateroretrusion, Laterodetrusion und Lateroprotusion möglich.

Der Nachteil eines solchen Dentalartikulators ist, dass er systematische Veränderungen des Kiefergelenks eines Patienten nicht abbilden kann. Ein Beispiel für derartige pathologische Veränderungen der Kiefergeometrie ist der sogenannte Diskus-Prolaps, bei dem der zwischen Ober- und Unterkiefer vorgesehene Diskus verrutscht ist und im Rahmen einer Therapie reponiert werden muss. Ein weiteres Problem ist eine Abreibung am Diskus, also ein arthrotischer Defekt, der auch im gesamten Verschwinden des Diskus enden kann, so dass unmittelbarer Kontakt der Knochen auftreten kann. Derartige Pathologien verändern die beim Patienten vorliegende Geometrie des Kiefergelenks, wobei nicht nur gleichmäßige vertikale Höhenveränderungen der Kondylen auftreten können, sondern auch Schrägstellungen oder horizontale Verschiebungen auftreten können.

Zur Therapie solcher Kiefergelenkschädigungen werden Schienen verwendet, die zwischen die Zähne eingesetzt werden können, um beispielsweise die alte Vertikale wieder herzustellen. Zur Konstruktion oder zum Einpassen solcher Schienen sind jedoch die bislang bekannten Dentalartikulatoren nicht geeignet.

Der Erfindung liegt daher die Aufgabe zugrunde, einen Dentalartikulator anzugeben, der eine genauere Abbildung der Kieferverhältnisse des Patienten und somit ein weiteres Anwendungsgebiet erlaubt.

Zur Lösung dieser Aufgabe ist bei einem Dentalartikulator der eingangs genannten Art erfindungsgemäß vorgesehen, dass Einstellmittel zur gemeinsamen Verschwenkung der Kondylen um eine zur Kondylarachse senkrechte horizontale Verstellachse und/oder zur gemeinsamen horizontalen Verschiebung der Kondylen entlang der Kondylarachse und/oder zur gemeinsamen vertikalen Verschiebung der Kondylen vorgesehen sind.

Das bedeutet, dass es beim erfindungsgemäßen Artikulator über die Einstellmittel zusätzlich noch möglich ist, die Kondylen auf eine oder mehrere Arten so zu verstellen, dass jedoch ihre Relativposition unverändert bleibt. Die Einstellung kann dabei mittelbar oder unmittelbar erfolgen. Erfindungsgemäß wurde erkannt, dass über eine solche Modifikation des Dentalartikulators durch Einstellung der Lage der Kondylen und insbesondere der Kondylarachse patientenspezifische Abweichungen in der Aufhängung des Kiefergelenks praktisch unmittelbar abgebildet werden können. Dabei handelt es sich um sehr kleine Einstellungswege, die den kleinen auftretenden Defekten bei Menschen angepasst sind. Beispielsweise kann vorgesehen sein, dass die vertikale Verschiebbarkeit der Kondylen über eine Strecke von 5 mm ermöglicht wird, eine Verschwenkung beispielsweise um ± 5°. Es handelt sich also bei den Mitteln letztendlich um Feineinstellmittel, mit denen den geringen Abweichungen im menschlichen Körper geeignet Rechnung getragen werden kann.

Damit bietet sich zum einen im Vergleich zu bekannten Dentalartikulatoren eine genauere Abbildung der geometrischen Verhältnisse im Patienten, was die Herstellung von Zahnersatz, beispielsweise Prothesen oder Brücken, verbessert, zum anderen erschließen sich jedoch auch neue Anwendungsmöglichkeiten des Dentalartikulators in Bezug auf zu therapierende Veränderungen an der Kiefergelenksaufhängung. Beispielsweise können Korrekturschienen oder dergleichen mit Hilfe des Dentalartikulators besonders passgenau im Labor erstellt werden. Dafür muss der Dentalartikulator unter Verwendung der Einstellmittel, wofür beispielsweise die Einstellmittel leicht zugängliche Einstellschrauben umfassen können, unter Beachtung der den Kiefer eines Patienten beschreibenden Messdaten durch eine entsprechende Veränderung der Einstellungen der Kondylen angepasst werden. Da die Kondylen grundsätzlich gemeinsam bewegt werden, haben die Einstellmittel keinerlei Einfluss auf eine gegebenenfalls vorher vorgenommene Justierung der Kondylen im Hinblick auf das auf sie über die Kondylargehäuse aufzusetzende Oberteil.

Der Dentalartikulator kann auch ein anterioses Führungselement, insbesondere einen auf einer Inzisalplatte geführten Inzisalstift, umfassen, wobei vorgesehen sein kann, dass auch der Inzisalstift in seiner Höhe verstellbar ist.

Die Einstellmittel des erfindungsgemäßen Dentalartikulators sind dabei, nachdem die Kondylen am Unterteil vorgesehen sind, ebenso dem Unterteil zugehörig. Um einen weiterhin labortauglichen und einfach einstellbaren Dentalartikulator zu erhalten, ist es vorteilhaft, wenn die Einstellmittel so ausgebildet sind, dass sich die Größe und Komplexität des Dentalartikulators wenigst möglich ändern. Grundsätzlich sind erfindungsgemäß eine Vielzahl verschiedener Einstellmittel denkbar, beispielsweise Gelenkverbindungen, Seilzüge und dergleichen. Im Hinblick auf den Platzbedarf ist es jedoch besonders günstig, wenn das Einstellmittel wenigstens eine Führung eines ersten, mit der Halterung für das erste Zahnmodell verbundenen Elements in ein zweites, mit den Kondylen verbundenes Element umfassen. Die Führung kann dabei einer der genannten Einstellarten (Verschwenkung, horizontale Verschiebung, vertikale Verschiebung) zugeordnet sein, wobei ein Teil der oder gar alle Einstellmöglichkeiten über eine Führung realisiert werden. Letztlich wird durch die Verwendung einer solchen Führung die an dem unteren Bauteil, insbesondere dem Sockel, angeordnete Kondylenhalterung in wenigstens zwei Teile aufgespalten, so dass das den Kondylen zugeordnete Element an dem die Kondylen umfassenden Teil in einer durch die Führung bestimmten Art gegen das erste Element und somit die Halterung für das erste Zahnmodell verstellbar wird. Die Führung gibt also eine Bahn vor, entlang derer die Elemente gegeneinander verschoben werden können, um eine der genannten Einstellmöglichkeiten zu realisieren.

Zweckmäßigerweise kann die Führung eine ein an einem der Elemente angeordnetes Führungsteil aufnehmende Nut oder Durchbrechung oder ein in sich gegenüberliegenden Nuten oder Durchbrechungen passgenau eingelagertes Führungsteil umfassen. Die Form der Nut oder Durchbrechung gibt dabei letztlich die Art der Bewegung vor, wobei in konkreter Ausgestaltung zur Realisierung der Verschwenkbarkeit eine kreissegmentförmige Nut oder Durchbrechung in wenigstens einem der Elemente und/oder zur Realisierung der vertikalen und/oder horizontalen Verschiebbarkeit wenigstens eine vertikale und/oder eine horizontale Nut oder Durchbrechung in wenigstens einem der Elemente vorgesehen sein kann. Während also grundsätzlich auch Schlittenführungen oder dergleichen im Rahmen der vorliegenden Erfindung verwendet werden können, hat die Ausgestaltung durch Nuten oder Durchbrechungen bei entsprechender Elementgestaltung den Vorteil, in die Elemente selbst integrierbar zu sein, so dass Platz eingespart werden kann.

Besonders vorteilhaft ist die erwähnte Ausgestaltung der Verschwenkbarkeit über wenigstens eine kreissegmentförmige Nut oder Durchbrechung zur Führung der Bewegung. Dann kann nämlich die Einstellung der Verschwenkung über ein einziges, das zweite Element gegen das erste Element bewegendes Betätigungsmittel realisiert werden.

Allgemein gibt es bei Verwendung einer Führung vielfältige Möglichkeiten zur Ausgestaltung des Betätigungsmittels, wobei beispielsweise vorgesehen sein kann, dass eine Führungsfläche der Nut oder Durchbrechung an dem zu bewegenden Element eine zahnstangenartige Oberfläche aufweist, in die ein insbesondere auch als Führungsteil dienendes Zahnrad eingreift, das an dem relativ zum anderen Teil unbewegten Teil vorgesehen ist, welches Zahnrad von außen über eine geeignete Vorrichtung drehbar gelagert ist und so eine Feineinstellung ermöglicht. In besonders zweckmäßiger Ausgestaltung kann jedoch vorgesehen sein, dass eine Einstellschraube, insbesondere eine Mikrometerschraube, zur Verstellung durch Angriff an einem der Elemente, welches in der Führung gegen die Rückstellkraft eines Gegenlagerungsmittels, insbesondere einer Feder, gelagert ist, vorgesehen ist. Die Einstellschraube ist dabei, insbesondere an einem Vorsprung oder einer entsprechenden Ausformung, an einem der Elemente so befestigt, dass sie, wenn sie gegen das andere Element angezogen wird, dieses in der Führung um ein entsprechendes Stück weiterbewegt. Durch das eine Rückstellkraft erzeugende Gegenlagerungsmittel, insbesondere eine gegenüber der Einstellschraube vorgesehene Feder, sind die eingestellten Positionen der Elemente zueinander wenigstens so stabil, dass eine hochexakte Einstellung erfolgen kann. Wird dabei eine Mikrometerschraube verwendet, so kann auch unmittelbar abgelesen werden, welche Einstellung gerade vorliegt, das bedeutet, die Mikrometerschraube wirkt auch als Messinstrument. Analog ist es auch möglich, dass an einem der Elemente ein durch ein Durchgangsloch eines an dem anderen Element angeordneten Abstützplättchens geführter Gewindestift befestigt ist, auf den ein an dem Abstützplättchen durch die Rückstellkraft eines Gegenlagerungsmittels, insbesondere einer Feder, anliegender, ein entsprechendes Gewinde aufweisender Einstellkopf aufgeschraubt ist. So kann, beispielsweise wenn keine geeignete Gegenlagerungsfläche vorliegt, die Verstellmöglichkeit einseitig auf kleinem Raum realisiert werden.

Mit besonderem Vorteil kann bei Verwendung einer Führung vorgesehen sein, dass die Elemente senkrecht stehende Platten sind. Auf diese Weise ist es möglich, die verschiedenen Einstellmöglichkeiten der Kondylen besonders platzsparend zu integrieren. Bereits im Stand der Technik bekannte Dentalartikulatoren weisen häufig im hinteren Bereich links und rechts angeordnete Stützen auf, an denen die Kondylen angeordnet sind. Diese Stützen sind dann im unteren Bereich durch eine Platte verbunden. Erfindungsgemäß kann nun bereits diese die beiden Stützen für die Kondylen verbindende Platte eines der Elemente sein, wobei ein oder mehrere weitere, zur Halterung für das erste Zahnmodell hin gelegene Platten als das oder mehrere weitere Elemente für Führungen dienen. In den Platten können dabei die Nuten und/oder Durchbrechungen ausgeformt sein, und eine Einstellschraube kann beispielsweise am schmalen Rand eines als Platte ausgebildeten Elements angreifen. Mit besonderem Vorteil kann vorgesehen sein, dass in der zwei als Kondylenhalterung wirkende Stützen verbindenden Platte eine diese abschnittsweise verdünnende Ausnehmung vorgesehen ist, in welcher Ausnehmung wenigstens eine weitere als Element einer Führung ausgebildete Platte eingesetzt ist. Auf diese Weise bleibt trotz der zusätzlichen Einstellmöglichkeiten die Dicke des die Kondylen tragenden Abschnitts des Unterteils letztlich gleich, wobei die die Stützen verbindende Platte gleichzeitig noch als Gegenlager für beispielsweise Federn oder andere Gegenlagerungsmittel und/oder zum Befestigen einer Einstellschraube dienen kann. Zur Öffnung der Ausnehmung hin können weiterhin Haltemittel, beispielsweise Führungsplättchen, vorgesehen sein, die die gesamte Plattenanordnung innerhalb der Ausnehmung halten.

Konkret kann dabei vorgesehen sein, dass eine vordere, mit dem die Halterung für das erste Zahnmodell umfassenden Sockel ortsfest verbundene Platte als erstes Element einer vertikalen Führung mit einer mittleren Platte als zweites Element der vertikalen Führung zusammenwirkt, wobei die mittlere Platte als erstes Element einer Schwenkführung mit einer als Halterung für die insbesondere noch horizontal verstellbaren Kondylen ausgebildeten hinteren Platte als zweites Element der Schwenkführung zusammenwirkt. Die hintere Platte kann in einem solchen Fall beispielsweise die bereits genannten Stützen, an denen die Kondylen befestigt sind, umfassen. Sie verbindet dann diese Stützen und wirkt gleichzeitig als zweites Element der Schwenkführung. Eine mittlere Platte erfüllt eine Doppelfunktion, indem sie als erstes Element der Schwenkführung und als zweites Element einer vertikalen Führung wirkt. Folglich ergibt sich ein System, in dem die vordere, mit der Halterung für das erste Zahnmodell verbundene Platte ortsfest ist, die mittlere Platte vertikal gegen die vordere Platte bewegbar ist und die hintere Platte gegen die mittlere Platte schwenkbar ist, so dass insgesamt die hintere Platte gegenüber der vorderen Platte vertikal verschiebbar und schwenkbar ist. Es sei an dieser Stelle angemerkt, dass auch ein System mit vier Platten denkbar wäre, welches dann auch die horizontale Verschiebbarkeit realisiert. Jedoch hat sich gezeigt, dass, wenn mit dem Dentalartikulator auch eine horizontale Verschiebung der Kondylen möglich sein soll, derartige Einstellmittel leichter unmittelbar an den Kondylen realisiert werden können, wie weiter unten noch dargestellt wird. Bei einer solchen vorgeschlagenen Ausbildung mit drei gegeneinander geführten Platten kann, wie oben bereits erwähnt, mit besonderem Vorteil vorgesehen sein, dass die die Stützen als Kondylenhalterung aufweisende hintere Platte eine Ausnehmung aufweist, in die die mittlere und die vordere Platte eingesetzt werden können. Auf diese Weise ist eine sehr platzsparende Konstruktion gegeben. Es ist darauf zu achten, die Ausnehmung etwas größer als die in ihr gelagerten Platten zu wählen, damit genügend Spiel für die Einstellmöglichkeiten verbleibt.

Zweckmäßigerweise kann wenigstens ein Feststellelement, insbesondere eine die Elemente aneinander anpressende Feststellschraube, zur Fixierung einer Einstellung vorgesehen sein. Im Beispielfall der hintereinander angeordneten, gegeneinander geführten Platten, kann beispielsweise eine durch die Platten durchgehende Bohrung vorgesehen sein, wobei die vordere oder hintere Platte ein Gewinde aufweist, in das eine an der hinteren oder der vorderen Platte durch die durch Bohrung durchgesteckte Feststellschraube eingreift. Durch ein solches Feststellelement wird erreicht, dass bei den späteren Bewegungen des Oberteils gegen das Unterteil keine ungewollte Verstellung der Kondylen auftritt.

Wie bereits erwähnt, kann es von Vorteil sein, wenn die eine horizontale Verschiebung erlaubenden Einstellmittel, so vorgesehen, nahe an den Kondylen selber angeordnet sind, insbesondere unmittelbar dort angreifen. So kann in einer konkreten, vorteilhaften Ausgestaltung der vorliegenden Erfindung vorgesehen sein, dass das Einstellmittel eine an einer Kondyle zur horizontalen Verschiebung angreifende Einstellschraube, insbesondere eine Mikrometerschraube, umfasst, wobei die andere Kondyle horizontal bewegbar gegen eine Rückstellkraft eines Gegenlagerungsmittels, insbesondere einer Feder, gelagert ist. In einer solchen Ausgestaltung wird ausgenutzt, dass bei aufgesetztem Oberteil beide Kondylen an ihrer entsprechenden Führungsfläche im Kondylargehäuse des Kondylargelenks anliegen, so dass das Oberteil die bei einer Kondyle durch die Aktion der Einstellschraube erzeugte Kraft an die andere Kondyle überträgt. Eine derartige horizontale Verstellbarkeit ist besonders einfach realisierbar.

Um eine Einstellung gemäß der Messdaten eines Patienten vornehmen zu können, muss der Bediener des Dentalartikulators die Einstellung des Einstellmittels in Relation zu diesen Messdaten setzen können. Daher kann vorzugsweise wenigstens eine eine aktuelle Einstelllung der Kondylen messende und anzeigende Mess- und Anzeigevorrichtung vorgesehen sein. Eine derartige Mess- bzw. Anzeigevorrichtung kann beispielsweise ein gegen eine Rückstellkraft gelagertes mechanisches Längenmesselement umfassen, das an einer der Platten bzw. an einem der Elemente einer Führung bzw. an einem Vorsprung an diesem Element angreift. Auf diese Weise kann die Wirkung der Betätigung der Einstellmittel durch einen Bediener unmittelbar abgelesen werden.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig.1 1: eine perspektivische Rückansicht des erfindungsgemäßen Den- talartikulators,
- Fig. 2: eine perspektivische Vorderansicht eines erfindungsgemäßen Den- talartikulators,
- Fig. 3: eine Rückansicht des erfindungsgemäßen Dentalartikulators,
- Fig. 4a: eine Explosionsansicht des Unterteils des erfindungsgemäßen Den- talartikulators aus einer vorderen Perspektive,
- Fig. 4b: eine Explosionsansicht des Unterteils des erfindungsgemäßen Den- talartikulators aus einer hinteren Perspektive,
- Fig. 5: eine Vorderansicht des erfindungsgemäßen Dentalartikulators, und
- Fig. 6: eine Prinzipskizze der Einstellmittel zur horizontalen Verschiebung der Kondylarstifte.

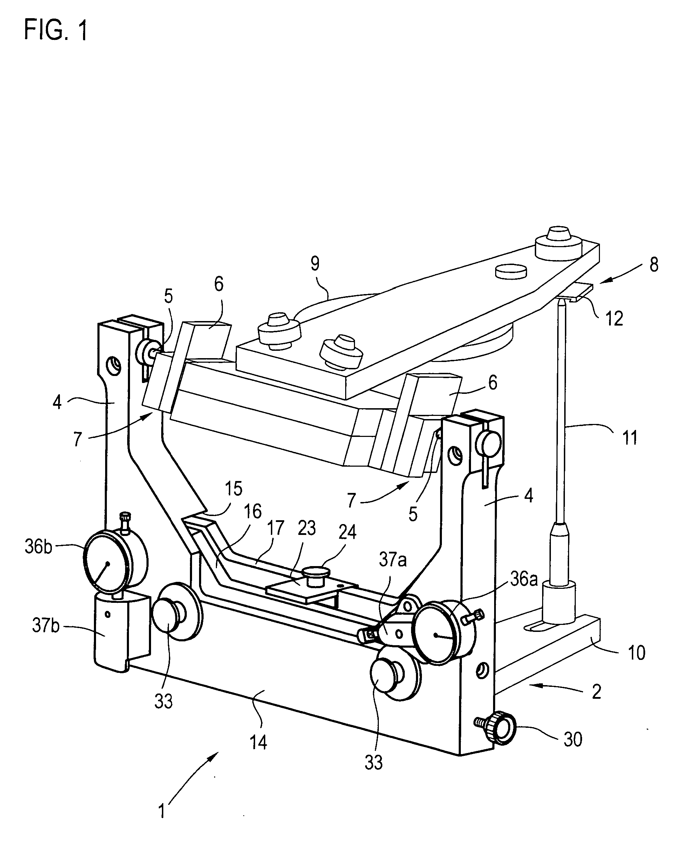

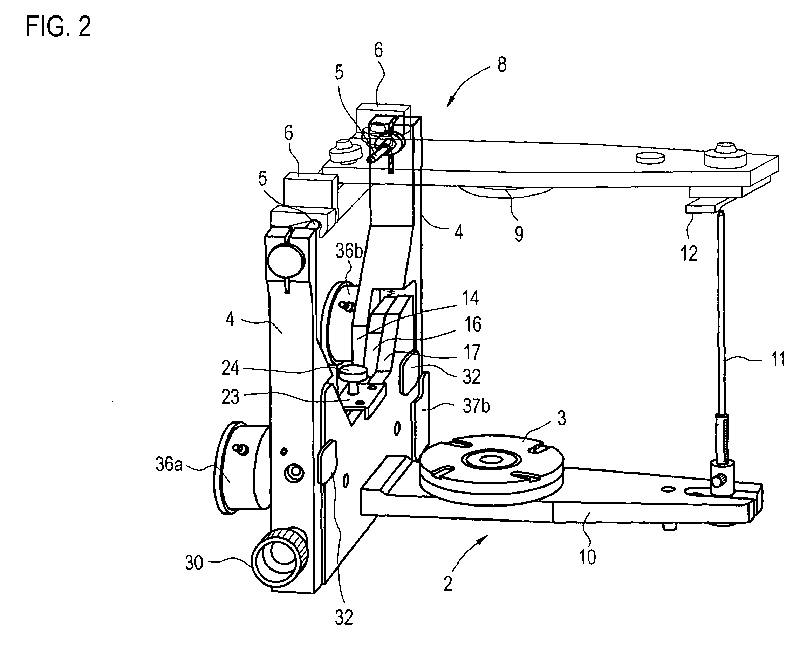

Die Fig. 1 - 5 zeigen ein erstes Ausführungsbeispiel eines erfindungsgemäßen Dentalartikulators 1. Er umfasst ein im Simulationsbetrieb feststehendes Unterteil 2, an dem eine Halterung 3 für ein hier nicht gezeigtes erstes Zahnmodell, insbesondere ein Gipsmodell eines Unterkiefers, vorgesehen ist. Das Unterteil 2 umfasst ferner im hinteren Bereich zwei voneinander beabstandete Stützen 4, die am oberen Ende als Kondylarhalterung für einwärts gerichtete Kondylarstifte 5 dienen. Auf die Kondylarstifte 5 ist jeweils ein Kondylargehäuse 6 aufgesetzt, so dass sich insgesamt zwei Kondylargelenke 7 ergeben. Die Kondylargehäuse 6 sind an einem Oberteil 8 des Dentalartikulators 1 angeordnet. Das Oberteil 8 umfasst ebenso eine Halterung 9 für ein zweites Zahnmodell, insbesondere eines Gipsmodells des Oberkiefers, das wiederum nicht dargestellt ist.

Vorne am Sockel 10 des Unterteils 2 ist ferner ein höhenverstellbarer Inzisalstift 11 vorgesehen, der sich an einer Inzisalführungsplatte 12 am Oberteil 8 abstützt. Der Inzisalstift 11 dient der anterioren Führung bei den Protusions-, Retrusions- und Laterotrusionsbewegungen. Die posteriore Führung erfolgt bei der Simulation der kiefergelenkseitigen transversalen und sagittalen Bewegungen mit Hilfe der Kondylargelenke 7 durch entsprechende Führungselemente für die Kondylarstifte 5 innerhalb des Kondylargehäuses 6.

Die genaue Ausgestaltung der Kondylargelenke und insgesamt der Schiebe-Schwenklagerung des Oberteils 8 gegen das Unterteil 2 ist im Stand der Technik weithin bekannt und soll daher nicht näher dargelegt werden. Lediglich beispielhaft sei auf die bereits eingangs erwähnte DE 197 26 978 C2 verwiesen.

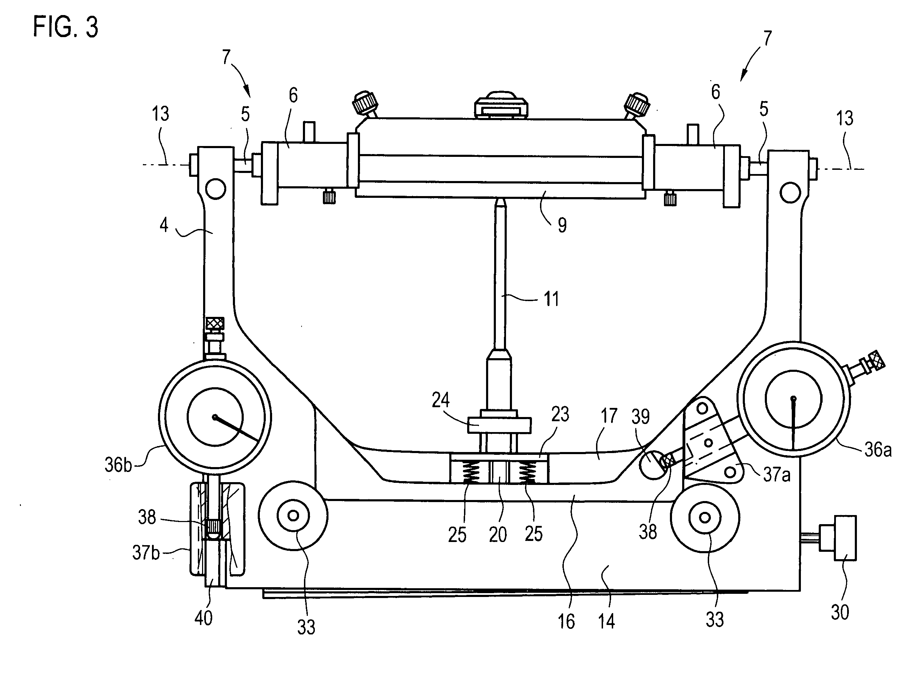

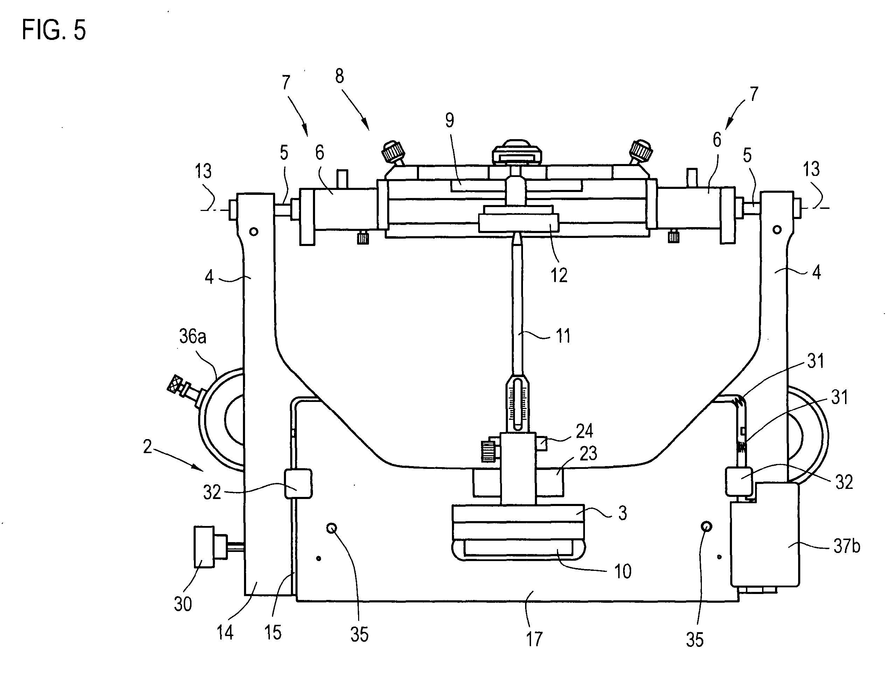

Die sich gegenüberliegenden Kondylarstifte 5 bilden eine zur Mittelvertikalebene des Dentalartikulators senkrechte Kondylarachse 13 (vgl. Fig. 3 und Fig. 5). Nun ist es bekannt, dass nicht bei jedem Menschen die Kondylen des Kiefergelenks gleich aufliegen, welcher Zustand insbesondere schmerzhaft und bedrohlich für die Kieferfunktion sein kann. Zum anderen kann eine solche verschobene Lage der Kondylen bei einem Patienten einen Einfluss auf die optimale Ausgestaltung von Zahnersatz, der mittels des Dentalartikulators 1 angepasst werden soll, haben.

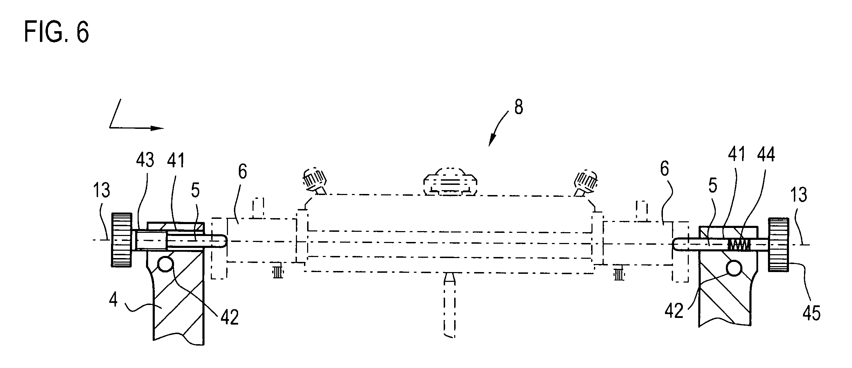

Daher sind beim Dentalartikulator 1 Einstellmittel zur gemeinsamen Verschwenkung der Kondylen um eine zur Kondylarachse senkrechte horizontale Verstellachse und zur gemeinsamen vertikalen Verschiebung der Kondylen vorgesehen, zusätzlich können auch Einstellmittel zur gemeinsamen horizontalen Verschiebung der Kondylen entlang der Kondylarachse vorgesehen sein (siehe unten Fig. 6). Dies wird nun im Folgenden näher erläutert. Ersichtlich sind die beiden Stützen 4 durch eine hintere Platte 14 verbunden. Die hintere Platte 14 weist ersichtlich eine Ausnehmung 15 auf, in der eine mittlere Platte 16 und eine vordere Platte 17 aufgenommen sind. An der vorderen Platte 17 ist der Sockel 10 mit der Halterung 3 für das erste Zahnmodell befestigt. Die Platten 14, 16 und 17 sind nun jeweils gegeneinander geführte Elemente von zwei Führungen, wobei die mittlere Platte 16 an zwei Führungen beteiligt ist.

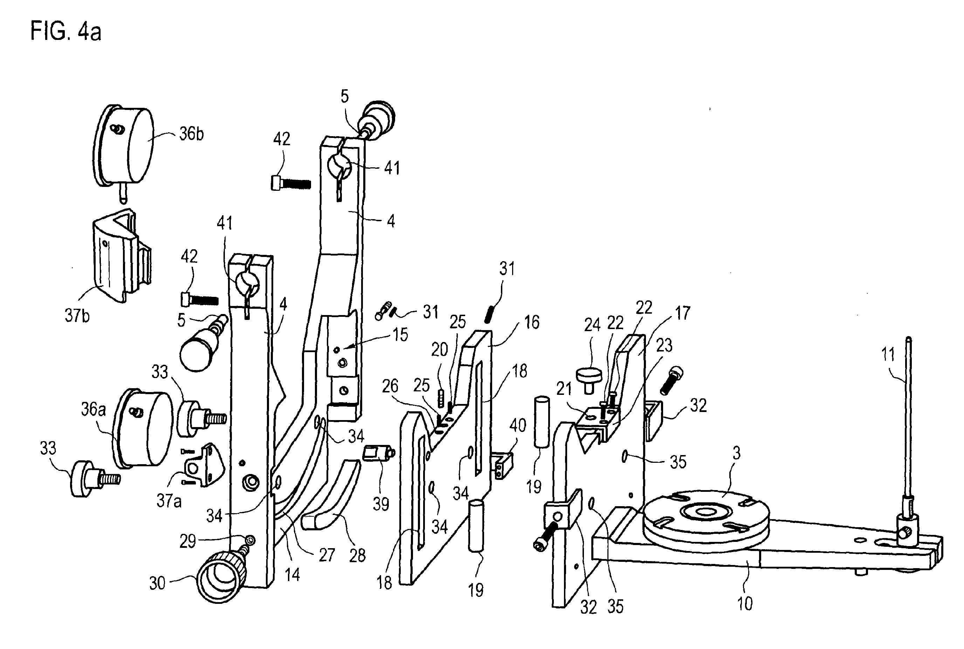

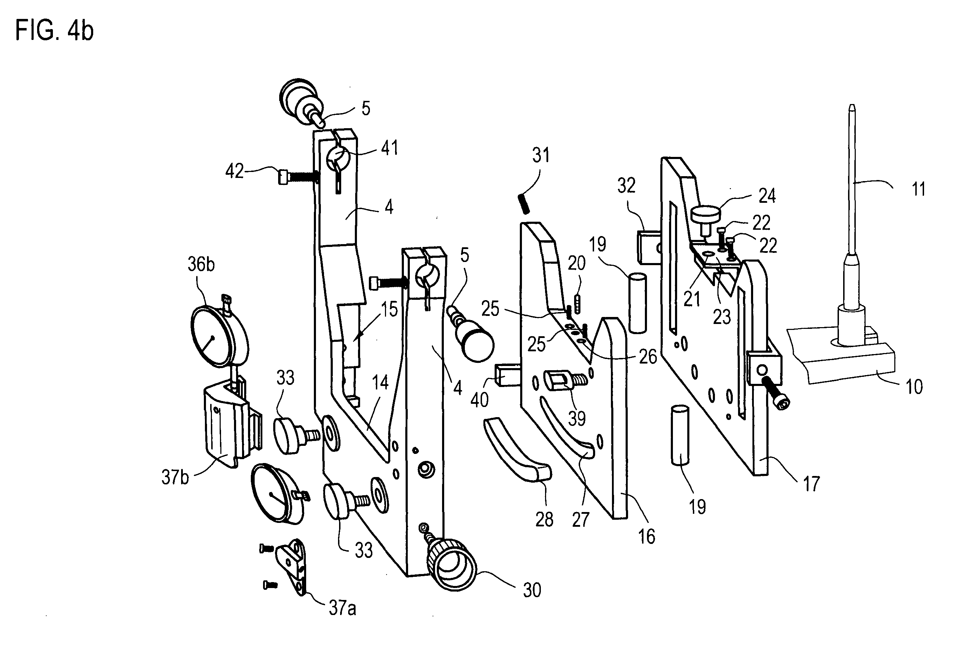

Dies ist am besten aus den Explosionszeichnungen in Fig. 4a und Fig. 4b ersichtlich. Die vordere Platte 17 und die mittlere Platte 16 weisen sich gegenüberliegend jeweils vertikal verlaufende Nuten 18 auf. Im zusammengebauten Zustand nehmen diese Nuten passgenau Führungsteile 19 auf, die möglichst spielfrei eine Vertikalbewegung der mittleren Platte 16 gegen die vordere Platte 17 erlauben. Die vordere Platte 17, auf der der Dentalartikulator 1 auch aufgestellt wird, bleibt dabei grundsätzlich ortsfest. Die vordere Platte 17 wirkt somit als erstes, der Halterung 3 für das erste Zahnmodell zugeordnetes Element, während die mittlere Platte 16 als zweites, den Kondylarstiften 15 zugeordnetes Element wirkt.

Um eine vertikale Verschiebung der Platte 16 gegen die Platte 17 frei einstellbar zu ermöglichen, sind Betätigungsmittel vorgesehen, die nun näher erläutert werden sollen. Fest mit der mittleren Platte 16 verbunden ist an deren oberen Seite mittig ein Gewindestift 20 vorgesehen. Der Gewindestift 20 ragt im verbauten Zustand durch ein Durchgangsloch 21 eines mittels Schrauben 22 auf der vorderen Platte 17 befestigten Abstützplättchens 23, welches sich folglich über die mittlere Platte 16 erstreckt. Auf den Gewindestift 20 aufgesetzt wird ein Einstellkopf 24 mit einem entsprechenden Innengewinde. Wird also der Einstellkopf 24 auf den Gewindestift 20 gedreht, wenn der Einstellkopf 24 auf dem Abstützplättchen 23 aufliegt, so wird die mittlere Platte geführt durch die Nuten 18 und das Führungsteil 19 gegen die vordere Platte 17 angehoben. Um die Anlage des Einstellkopfes 24 an dem Abstützplättchen 23 zu erzwingen und eine Rückstellkraft zu erzeugen, sind zwei Federn 25 beidseits dem Gewindestift 20 zwischen der mittleren Platte 16 und dem Abstützplättchen 23 angeordnet. Zur Stabilisierung können die Federn 25 in Vertiefungen 26 abgestützt sein.

Eine zweite Führung ist zwischen der mittleren Platte 16 und der hinteren Platte 14 in ähnlicher Form realisiert, wobei die mittlere Platte 16 als erstes zu führendes Element dabei der Halterung 3 zugeordnet ist, wobei gegen sie die hintere Platte 14 als zweites, den Kondylarstiften 5 zugeordnetes Element geführt ist. Damit soll eine Verschwenkbarkeit der hinteren Platte 14 gegen die mittlere Platte 16 und somit auch gegen die vordere Platte 17 erreicht werden. Dazu sind nun in der hinteren Platte 14 und in der mittleren Platte 16 sich jeweils gegenüberliegende kreissegmentförmige Nuten 27 vorgesehen, in die ein ebenfalls kreissegmentförmiges Führungsteil 28 passgenau eingesetzt ist. Auf diese Weise wird die gewünschte Schwenkführung erreicht. Zur Einstellung der Verschwenkung ist an einem seitlich die Ausnehmung 15 begrenzenden Wandstück auf Höhe der mittleren Platte 16 ein Gewindeloch 29 vorgesehen, durch das eine entsprechende Einstellschraube 30 so geführt ist, dass ihre Spitze seitlich an der mittleren Platte 16 anliegt. Durch die Rückstellkraft eines Federn 31 umfassenden Gegenlagerungsmittels wird die mittlere Platte 16 an die Schraube 30 angepresst. Die Federn 31 stützen sich dabei an der gegenüberliegenden Wand der Ausnehmung 15 ab, wobei zur Stabilisierung wiederum Einsenkungen vorgesehen sein können.

Wird nun die Schraube 30 hineingedreht, drückt sie gegen die mittlere Platte 16, so dass aufgrund der die Nuten 27 und das Führungsteil 28 umfassenden Führung die hintere Platte 14 mit den Stützen 4 und den, wie später dargestellt wird, gegebenenfalls noch horizontal verstellbaren Kondylarstiften 5 gegen die mittlere Platte 16 verschwenkt wird. Auf diese Weise ist eine einzige Einstellschraube 30 ausreichend, um die Verschwenkbarkeit zu erzielen.

Insgesamt ergibt sich also durch die drei gegeneinander geführten Platten 17, 16 und 14 ein kompaktes und platzsparendes System, das auf einfache Weise eine vertikale Verschiebung und eine Verschwenkung der Kondylarstifte 5 ermöglicht, wobei diese ihre relative Position beibehalten. Insgesamt ist also die hintere Platte 14 gegen die ortsfeste vordere Platte 17 verschwenkbar und höhenverstellbar gelagert. Um die Plattenanordnung aus den Platten 14, 16 und 17 stabil zu halten, sind ferner noch Führungsplättchen 32 vorgesehen, die beispielsweise, wie aus Fig. 4a und 4b ersichtlich, am Rande der Ausnehmung 15 an der hinteren Platte 14 befestigt werden können.

An dieser Stelle ist anzumerken, dass selbstverständlich auch nur an einer der Platten eine Nut vorgesehen sein kann, während ein Führungsteil fest verbunden an der anderen Platte ausgebildet oder befestigt sein kann.

Der Dentalartikulator 1 umfasst ferner Feststellelemente in Form von die Platten 14, 16 und 17 aneinander anpressenden Feststellschrauben 33, die durch entsprechend der möglichen Bewegbarkeit der Platten gegeneinander dimensionierte Durchgangslöcher 34 in den Platten 14 und 16 in entsprechende Gewindelöcher 35 in der vorderen Platte 17 eingreifen und somit die Platten durch Festziehen aneinander anpressen können, so dass bei der funktionsgemäßen Verwendung des Dentalartikulators 1 zur Simulation von Kieferbewegungen keine ungewollte Verstellung auftritt.

Ferner sind noch jeweils einer Führung zugeordnete Mess- und Anzeigevorrichtungen 36a und 36b vorgesehen, die über Halterungen 37a an der hinteren Platte 14 bzw. über die umgreifende Halterung 37b an der vorderen Platte 17 befestigt sind. Dabei greifen Messstifte 38, die über eine Rückstellkraft gegengelagert sind, an verschiedenen Punkten der mittleren Platte 16 an, um deren Verschiebung relativ zur vorderen Platte 17 bzw. zur hinteren Platte 14 messen zu können. Dafür ist bezüglich der Mess- und Anzeigevorrichtung 36a an der Platte 16 ein nach hinten abstehender Stift 39 vorgesehen, der eine abgeflachte Oberfläche für den Angriff des entsprechenden Messstiftes 38 aufweist. Wie aus den Fig. 4b und 3 ersichtlich, liegt der Messstift 38 der Mess- und Anzeigevorrichtung 36b an einem nach hinten geknickten Fortsatz 40 der Platte 16 an. Auf diese Weise kann einem Bediener die aktuelle Einstellung im Bezug auf die vertikale und Schwenkeinstellung zur Kenntnis gebracht werden, so dass dieser die Messwerte eines Patienten in eine entsprechende Einstellung des Dentalartikulators 1 umsetzen kann.

In den in den Fig. 1 - 5 dargestellten Zeichnungen ist ein Dentalartikulator 1 mit lediglich einer gemeinsamen vertikalen Einstellmöglichkeit der Kondylarstifte 5 und einer gemeinsamen Verschwenkmöglichkeit der Kondylarstifte 5 beschrieben. Diese beiden Einstellmöglichkeiten sind grundsätzlich ausreichend, um die meisten Kiefergelenke von Patienten zu beschreiben. Dementsprechend sind bei dem Dentalartikulator 1 die Kondylarstifte 5 wie bekannt in Durchgangslöcher 41 in den Stützen 4 eingesetzt und gegebenenfalls nach entsprechender Justage durch Feststellschrauben 42 dort fixiert.

Es liegt jedoch auch im Rahmen der vorliegenden Erfindung, zusätzlich Einstellmittel vorzusehen, die eine gemeinsame horizontale Verschiebung der Kondylarstifte 5 entlang der Kondylarachse 13 erlauben. Dies ist nun als Prinzipskizze in Fig. 6 näher dargestellt.

Ersichtlich sind die Kondylarstifte 5 weiterhin grundsätzlich entlang der Kondylarachse 13 verschiebbar in den Ausnehmungen 41 der Stützen 4 gelagert. Allerdings ist nun zu einer Seite eine Einstellschraube 43 vorgesehen, die an einem Kondylarstift 5 angreift und diesen somit entlang der Kondylarachse 13 verschieben kann. Auf die Kondylarstifte 5 ist nun bereits, wie angedeutet, das Oberteil 8 mit den Kondylargehäusen 6 aufgesetzt, so dass die Kondylarstifte 5 beide entlang der Kondylarachse 13 an einer Führungsfläche, insbesondere der Bennett-Führungsfläche, aufliegen, folglich, wenn der linke Kondylarstift 5 in Richtung des rechten Kondylarstifts 5 bewegt wird, auf diesen ein Druck entsteht. Auch der rechten Kondylarstift 5 ist entlang der Kondylarachse 13 verschiebbar gelagert, aber durch eine Feder 44 gegen eine Rückstellkraft. Die Feder 44 stützt sich dabei gegen eine Abschlussschraube 45 ab. Auf diese Weise entsteht auch, wenn die Einstellschraube 43 zurückgedreht wird, durch die Feder 44 eine entsprechende Kraftwirkung auf den linken Kondylarstift 5, so dass sich dieser immer im Anschlag an die Einstellschraube 43 befindet. Auf diese Weise ist eine gemeinsame Bewegung der Kondylarstifte 5 und des an ihnen festgelegten Oberteils 8 entlang der Stiftachse möglich, und zwar in jeder beliebigen vertikalen und/oder verschwenkten Position. Denn alle drei beschriebenen Einstellmöglichkeiten arbeiten unabhängig voneinander. Die bereits erwähnten Feststellschrauben 43 können bei dieser Ausgestaltung weiterhin zur Fixierung einer eingestellten horizontalen Verschiebung dienen.

Auch hier kann eine Mess- und Anzeigevorrichtung vorgesehen sein, jedoch kann auch die Einstellschraube 43 selbst als Mikrometerschraube ausgebildet sein, die die entsprechende Einstellung anzeigt.

Selbstverständlich sind im Rahmen der Erfindung auch noch weitere Ausgestaltungen denkbar, um die Einstellmittel zu realisieren. Das hier gezeigte Ausführungsbeispiel ist daher nicht einschränkend.

## Patentansprüche

1. Dentalartikulator (1), umfassend ein gegenüber einem Oberteil (8) ortsfestes Unterteil (2) mit einer Halterung (3) für ein erstes Zahnmodell, insbesondere einen Gipsabdruck eines Unter- oder Oberkiefers, sowie das über eine Schiebe-Schwenklagerung nach Art eines Kiefergelenks gegen das Unterteil (2) bewegbare Oberteil (8) mit einer Halterung (9) für ein zweites, dem ersten zugeordnetes Zahnmodell, insbesondere einen Gipsabdruck eines Ober- oder Unterkiefers, wobei die Schiebe-Schwenklagerung zwei Kondylargelenke (7) mit jeweils einem auf eine an dem Unterteil (2) vorgesehene Kondyle, insbesondere einen Kondylarstift (5), aufsetzbaren Kondylargehäuse (6) am Oberteil (8) zur Simulation der Kiefergelenkbewegungen umfasst, wobei die Kondylen eine zur Mittelvertikalebene des Dentalartikulators (1) senkrechte Kondylarachse (13) bilden, **dadurch gekennzeichnet, dass** Einstellmittel zur gemeinsamen Verschwenkung der Kondylen um eine zur Kondylarachse (13) senkrechte horizontale Verstellachse und/oder zur gemeinsamen horizontalen Verschiebung der Kondylen entlang der Kondylarachse (13) und/oder zur gemeinsamen vertikalen Verschiebung der Kondylen vorgesehen sind.

2. Dentalartikulator nach Anspruch 1, **dadurch gekennzeichnet, dass** die Einstellmittel wenigstens eine Führung eines ersten, mit der Halterung (3) für das erste Zahnmodell verbundenen Elements gegen ein zweites, mit den Kondylen verbundenes Element umfassen.

3. Dentalartikulator nach Anspruch 2, **dadurch gekennzeichnet, dass** die oder eine Führung eine ein an einem der Elemente angeordnetes Führungsteil (19, 28) aufnehmende Nut (18, 27) oder Durchbrechung oder ein in sich gegenüberliegenden Nuten (18, 27) oder Durchbrechungen passgenau eingelagertes Führungsteil (19, 28) umfasst.

4. Dentalartikulator nach Anspruch 3, **dadurch gekennzeichnet, dass** zur Realisierung der Verschwenkbarkeit eine kreissegmentförmige Nut (27) oder Durchbrechung in wenigstens einem der Elemente vorgesehen ist und/oder zur Realisierung der vertikalen und/oder horizontalen Verschiebbarkeit wenigstens eine vertikale und/oder eine horizontale Nut (18) oder Durchbrechung in wenigstens einem der Elemente vorgesehen ist.

5. Dentalartikulator nach einem der Ansprüche 2 bis 4, **dadurch gekennzeichnet, dass** eine Einstellschraube (30), insbesondere eine Mikrometerschraube, zur Verstellung durch Angriff an eines der Elemente, welches in der Führung gegen die Rückstellkraft eines Gegenlagerungsmittels, insbesondere einer Feder (31), gelagert ist, vorgesehen ist.

6. Dentalartikulator nach einem der Ansprüche 2 bis 5, **dadurch gekennzeichnet, dass** an einem der Elemente ein durch ein Durchgangsloch (21) eines an dem anderen Element angeordneten Abstützplättchens (23) geführter Gewindestift (20) befestigt ist, auf den ein an dem Abstützplättchen (23) durch die Rückstellkraft eines Gegenlagerungsmittels, insbesondere einer Feder (25), anliegender, ein entsprechendes Gewinde aufweisender Einstellkopf (24) aufgeschraubt ist.

7. Dentalartikulator nach einem der Ansprüche 2 bis 6, **dadurch gekennzeichnet, dass** die Elemente senkrecht stehende Platten (14, 16, 17) sind.

8. Dentalartikulator nach Anspruch 7, **dadurch gekennzeichnet, dass** eine vordere, mit dem die Halterung (3) für das erste Zahnmodell umfassenden Sockel (10) ortsfest verbundene Platte (17) als erstes Element einer vertikalen Führung mit einer mittleren Platte (16) als zweites Element der vertikalen Führung zusammenwirkt, wobei die mittlere Platte (16) als erstes Element einer Schwenkführung mit einer als Halterung für die insbesondere noch horizontal verstellbaren Kondylen ausgebildeten hinteren Platte (14) als zweites Element der Schwenkführung zusammenwirkt.

9. Dentalartikulator nach einem der vorangehenden Ansprüche, **dadurch gekennzeichnet, dass** wenigstens ein Feststellelement, insbesondere eine die Elemente aneinander anpressende Feststellschraube (33), zur Fixierung einer Einstellung vorgesehen ist.

10. Dentalartikulator nach einem der vorangehenden Ansprüche, **dadurch gekennzeichnet, dass** das Einstellmittel eine an einer Kondyle zur horizontalen Verschiebung angreifende Einstellschraube (43), insbesondere eine Mikrometerschraube, umfasst, wobei die andere Kondyle horizontal bewegbar gegen eine Rückstellkraft eines Gegenlagerungsmittels, insbesondere einer Feder (44), gelagert ist.

11. Dentalartikulator nach einem der vorangehenden Ansprüche, **dadurch gekennzeichnet, dass** wenigstens eine eine aktuelle Einstellung der Kondylen messende und anzeigende Mess- und Anzeigevorrichtung (36a, 36b) vorgesehen ist.
